# EUROPEAN PATENT APPLICATION

(11) **EP 1 443 230 A1**
(43) Date of publication of application: **04.08.2004**
(21) Application number: 04100190.0
(22) Date of filing: 21.01.2004
(51) Int. Cl.: F16C 33/66, F16C 35/04

(54) **Grease Lubricated Housing for a Rolling Element Bearing**

(30) Priority: 28.01.2003 SE 0300199
(71) Applicant: Aktiebolaget SKF, S-415 50 Göteborg (SE)
(72) Inventor: OlLSSON, HENRIK, SE-641 45, KATRINEHOLM (SE); STENDAHL, JÖRGEN, SE-643 93, VING KER (SE); CLASBORN, KJELL, SE-641 52, KATRINEHOLM (SE)
(74) Representative: Westman, Per Börje Ingemar

(57) **Abstract**

The invention refers to a grease lubricated bearing housing (1) having a housing wall arranged to form a seat (4) for the outer race ring of a bearing (2), and having on each axial side of said seat a space (5, 6) limited by an axially extending wall portion and a radial gable wall, having an opening for receiving a shaft (3) supported in a bearing positioned in the seat (4) or a gable lid, the wall of the bearing housing being provided with a through-bore (8) for receiving a grease nipple (9), and opening in the interior of the bearing housing in at least one of the two spaces (5) axially outside the bearing seat (4), whereby the interior of the bearing housing wall is provided with a material conglomeration (12) positioned in connection to the interior opening of the through-bore (8), the material conglomeration (12) being positioned so as to form a shield urging grease introduced through the through-bore (8) to move primarily towards the bearing seat (4), preventing grease from primarily filling out the space (5) in which the through-bore (8) opens.

## Description

### Background of the invention

The present invention refers to a grease lubricated bearing housing. Rolling bearings positioned in bearing housings require lubrication for reduced friction and cooling purposes. In many cases it is sufficient to provide the bearing housing with a quantity of lubricant in form of oil or grease, which will provide adequate lubrication during the life span of the bearing assembly, or at least during periods between routine inspections.

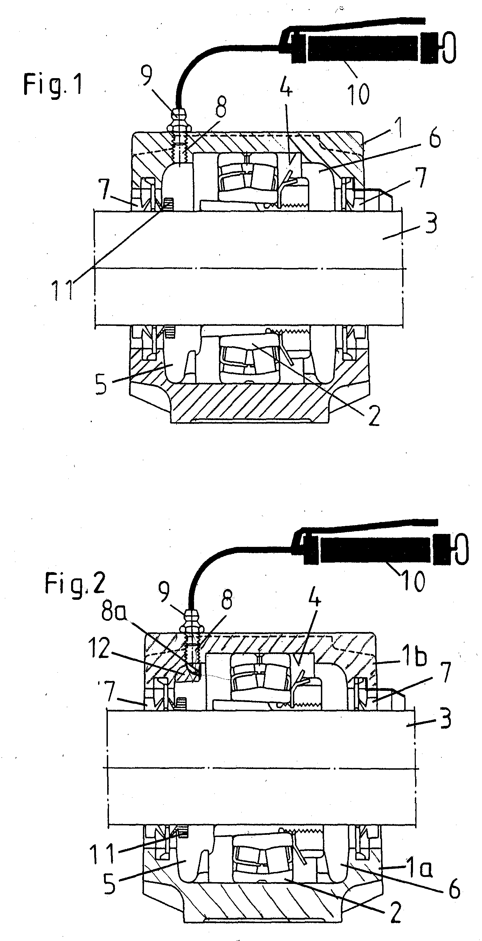

Certain operating conditions, such as high rotational speeds, high temperatures or heavy loads necessitate more frequent relubrication. For this purpose, the wall of the bearing housings have been provided with drilled through-holes in which have been positioned grease nipples, through which relubrication can be carried out by introduction of grease by means of an appropriate grease gun.
Commonly the bore in the bearing housing wall has been positioned outside the bearing seat in the bearing housing, such as illustrated in the accompanying drawing Fig. 1, which shows such a prior art arrangement. In this embodiment the bearing housing 1 is shown in a schematical cross section. A bearing 2 is mounted with its inner bearing ring on a shaft 3, which extends through the bearing housing, and the outer bearing ring is inserted in a bearing seat 4 in the housing. On both sides of the bearing seat 4 there is provided an annular chamber 5, 6 in the bearing housing, and each one of these chambers is sealed off against the exterior by means of an external seal 7. A through-bore 8 extending through the wall of the bearing housing is positioned to open in one of the annular chambers 5. A grease nipple 9 is screwed into the threaded through-bore 8 and a grease gun 10 can be coupled to the nipple 9 for introducing grease under pressure into the bearing housing for relubrication purposes. By providing an inner seal 11 in the annular chamber 5, where the grease thus can be introduced , it is ascertained that the grease introduced under pressure will not escape through the opening in the bearing housing at that chamber, but it will be pressed through the bearing and into the opposite annular chamber 6, thereby ascertaining that the grease is positively introduced into the bearing 2, where its lubricating and cooling properties are required.

However, this often used arrangement has some drawbacks, and primarily that a large quantity of surplus grease is introduced as the grease, when being pressed in, first will fill up the major part of the annular chamber 5 before it will begin penetrating through the bearing, whereupon it will fill up at least a large portion of the opposite annular chamber 6 before the introduction of grease can be interrupted. This means that a large quantity will be introduced into the bearing housing and it will be trapped in positions in the bearing housing where it will have no intended effect.

Bearing housings for two row rolling bearings have also in some embodiments, such as shown e.g. in GB 1 385 834, a grease nipple bore positioned just in front of a channel leading from the exterior of the outer bearing ring and opening in the interior of the bearing in a position between the two rows of rolling bodies. This positioning of the grease supply bore, will improve the possibilities of introducing a comparatively small volume of grease into the bearing and bearing housing and still obtain a sufficient and satisfactory lubrication of the bearing. The positioning of the grease nipple in such a position is however not suitable in all applications and therefore the use of such a design is often rejected.

From EP 0 290 091 A1 is known a bearing housing having a grease nipple opening in a separate bent supply pipe positioned a supply pipe held by a locking ring arranged adjacent the bearing and in contact with the non-rotating bearing ring thereof. This design is believed to lead the grease introduced via the grease nipple into the bearing in a manner not causing gathering of inactive grease volumes in the annular chamber where the supply pipe is positioned, but this design has a big drawback in that it requires two added elements, i.e. a supply pipe and a locking ring, and it is evident that the assembly of such a bearing housing requires to be made by a very careful and experienced person as the slightest incorrect positioning will cause that more or less of the grease introduced will not be lead by the supply pipe.

### Purpose and most essential features of the invention

The purpose of the present invention is to provide an improved bearing housing wherein the problems experienced with earlier solutions regarding relubrication have been overcome in a simple and yet very reliable manner, and this has been achieved in that the bearing housing has been designed in the manner defined in the characterizing part of the accompanying claim 1.

### Brief description of the drawings

As stated above Fig. 1 represents a prior art bearing housing solution for introduction of lubricant.

Hereinafter the invention will be further described with reference to improved embodiments of a bearing housing in accordance with the present invention.

Fig. 2 shows schematically in a view corresponding to the prior art housing shown in Fig. 1, a cross section of a first embodiment of a bearing housing designed in accordance with the present invention.

Fig. 3 is perspective view obliquely from the inner side of the upper half of the bearing housing in accordance with the present invention.

Fig. 4 is a perspective view showing the inner side of the bearing housing half shown in Fig. 3, but viewed from a more central position, and

Fig. 5 is another perspective view of an alternative embodiment of the inner side of an upper bearing housing half according to the present invention.

### Description of the preferred embodiment

A preferred embodiment of the present invention is shown in Fig. 2, which is a cross sectional view similar to the prior art embodiment shown in Fig. 1 and described hereabove. Components and details similar to each other in the embodiments according to the invention and the prior art embodiment according to Fig. 1 have been given the same reference numbers.

Thus the bearing housing according to the present invention shown in cross section in Fig. 2 incorporates a lower bearing housing base 1a and an upper bearing housing half 1b. A bearing 2 is mounted with its inner bearing ring on a shaft 3, which extends through the bearing housing, and the outer bearing ring is inserted in a bearing seat 4 in the housing. On both sides of the bearing seat 4 there is provided an annular chamber 5, 6 in the bearing housing, and each one of these chambers is sealed off against the exterior by means of an external seal 7. A through-bore 8 extending through the wall of the bearing housing is positioned to open in one of the annular chambers 5. A grease nipple 9 is screwed into the threaded through-bore 8 and a grease gun 10 can be coupled to the nipple 9 for introducing grease under pressure into the bearing housing for relubrication purposes. By providing an inner seal 11 in the annular chamber 5, where the grease thus can be introduced, it is ascertained that the grease introduced under pressure will not escape through the opening in the bearing housing at that chamber.

The main difference between the prior art embodiment according to Fig. 1 and the bearing housing according to the present invention is, that the upper bearing housing half 1b interiorly is provided with an integrated material conglomeration 12, which is positioned in the area, where the through-bore 8 extends through the bearing housing wall. In the embodiment shown in Fig. 2, the through-bore 8 also extends through the material conglomeration 12 and opens in a surface thereof facing against the bearing 2 provided in the seat 4. In this manner the grease introduced in the bearing housing under pressure, by means of the grease gun 10, will be positively guided towards the bearing, where the lubricating capacity of the grease is needed, without the grease thereby having a tendency first to fill out the major part of the annular chamber 5. The bearing housing being formed by a casting operation is easily provided with this material conglomeration 12 during the casting thereof, and the through-bore 8 is then produced by a drilling and tapping operation, thus that the through-bore 8 penetrates the wall of the upper housing half 1b, so that it will have a shield formed by the material in the integrated material conglomeration, which causes the introduced grease to move directly inside the bearing 2 instead of first moving into the lower part of the chamber 5 and from there eventually into the chamber surrounded by the bearing seat 4. As can be seen in this embodiment, the through-bore 8 is made in such a manner, that the orifice 8a thereof opens in a direction towards the interior of the bearing, which has been effected in that the bore has been made in the material conglomeration 12 close to the inner edge thereof facing the bearing, but has not been made radially right through the entire material conglomeration 12. Thus an orifice curved towards the bearing has been obtained.

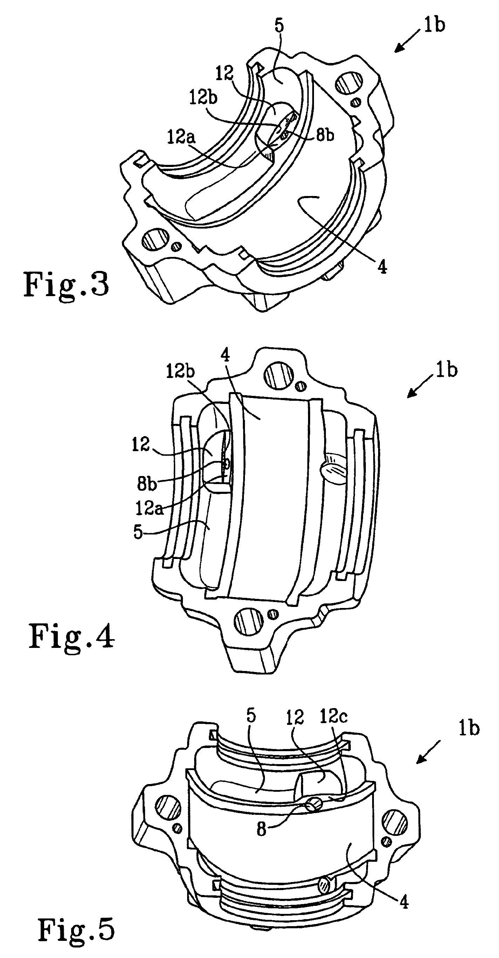

Fig. 3 shows in a perspective view seen obliquely from the inner side of the housing, an embodiment of an upper bearing housing half 1b, which is somewhat modified, as compared to the embodiment shown in Fig. 2. This bearing housing half thus is shown without bearing, shaft and seals, and it incorporates, i.a. a bearing seat 4, and a side chamber 5 located axially beside the bearing seat 4. The housing wall of the chamber 5, at one radial position is provided with a material conglomeration 12, made as an integral element of the bearing housing wall and projecting radially and axially towards the bearing seat 4. The material conglomeration 12 is made with a stepped portion at its interior end, facing the bearing seat 4, which stepped portion incorporates an axially extending surface 12a, and an adjoining, substantially radially extending surface 12b. In this embodiment of the invention the orifice 8b of the through-bore 8 opens at this stepped portion of the material conglomeration 12, thus that a combination of the axial and radial surfaces 12a, 12b of the stepped portion will form a shield or barrier urging grease, which is introduced in the bearing housing via the bore 8, to move primarily towards the interior of the bearing seat compartment, thereby not at first filling out the chamber 5 in which the through-hole 8 opens.

The bearing housing half 1b shown in Fig. 3 is also shown in Fig. 4, whereby the perspective is seen, when the housing half 1b has been pivoted thus that it is seen almost straight from the inside thereof. This view is believed further to clarify the designation of the stepped portion and the positioning of the surfaces 12a, 12b acting as a shield for grease introduced through the orifice 8b.

Fig. 5 fmally shows a further embodiment of a bearing housing upper half 1b having a centrally located surface, forming half a bearing seat 4 for a bearing. At one side of the bearing seat is provided a semi-cylindrical chamber 5, in which is provided an integral material conglomeration 12 or bulge, having a radially extending surface 12c. The through-bore 8 for introduction of grease is positioned immediately beside the conglomeration 12, at the side thereof facing the bearing seat 4, and thus that it will have the radially extending surface 12c of the conglomeration 12 directly adjacent itself, thereby urging grease introduced under pressure through the through-hole 8 to be prevented from moving in a direction away from the bearing seat 4.

The invention is not limited to the embodiments illustrated and described, but modifications and variants are possible within the scope of the accompanying drawings. Thus the bearing housing has been shown in the three different embodiments of the invention as a horizontally split, two-part bearing housing, supporting in a double-row spherical roller bearing a shaft extending right through the housing, but it is to be understood, that the bearing housing can be designed in other manners, and it can support the shaft in other types of bearing than the type illustrated in Fig. 2, and the bearing housing can also support a shaft, which projects only from one side of the bearing housing, which in that case has an end cover inserted in the circular opening , whereby the through-bore in the wall of the bearing housing is preferably situated at the side of the bearing housing opposed to that being prevented by such an end cover.

## Claims

1. A grease lubricated bearing housing (1) having a housing wall arranged to form a seat (4) for the outer race ring of a bearing (2), and having on each axial side of said seat a space (5, 6) limited by an axially extending wall portion and a radial gable wall, having an opening for receiving a shaft (3) supported in a bearing positioned in the seat (4) or a gable lid, the wall of the bearing housing being provided with a through-bore (8) for receiving a grease nipple (9), and opening in the interior of the bearing housing in at least one of the two spaces (5) axially outside the bearing seat (4),
**characterized therein,**
that the interior of the bearing housing wall is provided with a material conglomeration (12) positioned in connection to the interior opening of the through-bore (8), the material conglomeration (12) being positioned so as to form a shield urging grease introduced through the through-bore (8) to move primarily towards the bearing seat (4), preventing grease from primarily filling out the space (5) in which the through-bore (8) opens.

2. A bearing housing as claimed in claim 1,
**characterized therein,**
that the through-bore (8) has an orifice (8a) extending through at least a part of the material conglomeration (12), said orifice (8a) being arranged to project in a direction towards the bearing seat (4).

3. A bearing housing as claimed in claim 1,
**characterized therein,**
that the material conglomeration (12) has a stepped portion with an axial surface (12a) and an adjoining radial surface (12b) facing the bearing seat (4), and that the through-bore (8) extends through the material conglomeration (12) and opens in the axially extending surface (12a) that the radially extending surface (12b) of the stepped portion in combination with the axial surface (12a) forms a shield urging grease introduced through the through-bore (8) to move primarily towards the bearing seat (4), preventing grease from primarily filling out the space (5) in which the through-bore (8) opens.

4. A bearing housing as claimed in claim 1,
**characterized therein,**
that the through-bore (8) is positioned directly adjacent the interior material conglomeration (12) in the bearing housing, thus that a radially extending surface (12c) of the material conglomeration (12) forms a shield urging grease introduced through the through-bore (8) to move primarily towards the bearing seat (4), preventing grease from primarily filling out the space (5) in which the through-bore (8) opens.

5. A bearing housing as claimed in anyone of claims 1 - 4,
**characterized therein,**
that the material conglomeration (12) is an integrated portion of the wall of the bearing housings (1b).

6. A bearing housing as claimed in anyone of claims 1 - 4,
**characterized therein,**
that the material conglomeration (12) is a bulge-formed integrated portion of the wall of the bearing housings (1b).
